# EUROPEAN PATENT SPECIFICATION

(11) **EP 0 782 540 B1**
(45) Date of publication and mention of the grant of the patent: **12.05.1999**
(21) Application number: 95932067.2
(22) Date of filing: 19.09.1995
(51) Int. Cl.: C01B 15/043, B01J 8/08, B01J 19/24, C04B 2/08, C22B 11/00

(54) **REACTOR AND PROCESS FOR PRODUCING CALCIUM PEROXIDE**
VORRICHTUNG UND VERFAHREN ZUR HERSTELLUNG VON CALCIUMPEROXID
REACTEUR ET PROCEDE DE PRODUCTION DE PEROXYDE DE CALCIUM

(30) Priority: 21.09.1994 GB 9418984
(43) Date of publication of application: 09.07.1997
(73) Proprietor: SOLVAY INTEROX LIMITED, Warrington, Cheshire WA4 6HB (GB)
(72) Inventor: BAILEY, John, Edward, Warrington WA5 3DW (GB); WYBORN, Phillip, James, Runcorn WA7 3HZ (GB); McNEILLIE, Alastair, Houston, TX 77077 (US)
(74) Representative: Vande Gucht, Anne
(86) International application number: GB9502220
(87) International publication number: WO9609244

(56) References cited:
- EP-A- 0 040 318
- EP-A- 0 234 279
- GB-A- 2 219 474
- DATABASE WPI Week 7802 Derwent Publications Ltd., London, GB; AN 02921 & JP,A,52 139 695 (NIPPON PEROXIDE KK) , 21 November 1977
- DATABASE WPI Week 8541 Derwent Publications Ltd., London, GB; AN 252485 & JP,A,60 166 204 (YAHASHI KOGYO KK) , 29 August 1985

## Description

This invention concerns low profile reactors, and particularly low profile reactors for the production of calcium peroxide.

Calcium peroxide is a reagent which has been shown to improve the recovery of gold in heap leaching and in agitation leaching, see for example British Patent No. 2,219,474 and Australian Patent no. 631,411, and can also be employed in the extraction of silver. However, gold and silver extraction is usually carried out in remote locations. To avoid the cost of transporting significant quantities of water, it is desirable to produce the calcium peroxide in a dry form. Unfortunately, the drying stage commonly causes a loss of a significant percentage of the available oxygen content of calcium peroxide. The drying stage is also an energy intensive process, and is therefore relatively expensive. It would therefore be desirable to produce the calcium peroxide on site to avoid additional transport costs.

It is known that calcium peroxide can be produced by the reaction between lime (calcium hydroxide) and hydrogen peroxide. Hydrogen peroxide is a reagent sometimes present at gold and silver extraction sites for use in the extraction and/or detoxification process. Lime can readily be prepared at gold and silver extraction sites by the slaking of quicklime (calcium oxide), which itself is a common reagent at gold and silver extraction sites for use in the pH adjustment of the extracting process. It is possible to employ some of the quicklime from the gold or silver extraction process in a conventional agitated reactor for slaking, and then to add hydrogen peroxide to the slaked lime, either, employing the same reactor in a batch process, or an additional reactor in a batch or continuous process. However, such processes would require one or more separate agitated reactors, which themselves would require additional maintenance, particularly because of the likelihood of an accumulation of grit from the lime jamming the reactors. Additionally, particularly when gold or silver is being extracted by the use of heap leaching, wherein lime is often added to a conveyor belt carrying crushed ore, such a process would require significant modification of the lime addition process, particularly the existing equipment in the vicinity of the lime addition point. The operation of conventional agitation reactors to produce calcium peroxide is therefore not attractive to operators of gold or silver extraction sites.

Alternative types of apparatus for hydrating lime are described in EP-A-234279 in which lime and water are fed into inclined drums equipped with mixing shaft, tall vertical silos, vertical water-tight slaking drums for batch processing, inclined rotating drum bodies having one open end through which feedstock is introduced and product removed, again for batch processing and finally an inclined rotating drum extending between feedstock inlet and product outlet.

Particularly in the case of heap leaching of gold or silver, one location where it would be very convenient to locate a reactor for the generation of calcium peroxide is between the lime discharge chute and the conveyor belt carrying crushed ore. The space available in such a location is such that the maximum permissible height for a reactor is often in the region of 40 to 50 cm. This places a significant restriction on the height of a reactor for use in this location. It can therefore be seen that conventional reactors and silo or drum reactors , in addition to the drawbacks mentioned above, are not suitable for use in the most convenient location for a calcium peroxide generator in a heap leaching operation.

It is an object of certain aspects of the present invention to provide a reactor suitable for the production of calcium peroxide at gold or silver extraction sites, particularly those employing heap leaching, which can be located between the lime discharge chute and the conveyor belt carrying crushed ore.

According to one aspect of the present invention, there is provided an inclined reactor for the generation of calcium peroxide comprising an inlet for quicklime or lime, an inlet for water, an inlet for aqueous hydrogen peroxide solution, an inclined tray having a first, slaking zone; one or more baffles configured to direct slaked lime into a second, mixing zone, and a third, output zone.

According to a second aspect of the present invention, there is provided a process for the production of calcium peroxide by reaction between slaked lime and hydrogen peroxide, wherein lime or quicklime, aqueous hydrogen peroxide solution and water are introduced through inlets into a reactor comprising an inclined tray having a first, slaking zone; one or more baffles configured to direct slaked lime into a second, mixing zone, and thereafter into a third, output zone, the lime or quicklime and water being introduced into the slaking zone of the reactor and the aqueous hydrogen peroxide solution being introduced contemporaneous with or subsequent to the water introduction.

The reactor according to the present invention is particularly suited for use in gold or silver extraction processes where heap leaching is employed. However, it will be recognised that the reactor is also suitable for use with other gold or silver extraction processes, for example agitation leaching.

The reactor according to the present invention can be located between the lime discharge chute and the conveyor belt carrying crushed ore in a heap leaching process. The reactor is inclined from the horizontal to allow the flow of reagents from the slaking zone to the reaction and output zone. The angle of inclination can be adjusted to suit the flow rate desired, and commonly ranges from 5° to 45°, preferably from 10° to 25°, from the horizontal.

The inlet for quicklime or lime and the inlet for water are often configured so as to feed the reagents into the slaking zone, and where quicklime is employed as reagent, the inlets are normally positioned to allow sufficient slaking of the quicklime to allow formation of calcium peroxide to occur. The actual configuration of the inlets can depend on the reagents employed and can be varied at the discretion of the process user. In some embodiments of the present invention, for example, when dry quicklime or lime is employed as a reagent, the hydrogen peroxide inlet can serve the function of the water inlet. Alternatively, when slurried quicklime is employed as a reagent, the quicklime inlet can serve the function of the water inlet. In such cases, there is no need for a separate water inlet, but in some embodiments, a separate water inlet is provided to enhance or improve the flow of reagents through the reactor.

When a separate inlet for water is provided, the inlet often comprises one or more jets or sprays of water into the slaking zone at the desired location to ensure adequate slaking of the lime, which may be at substantially the same location as the quicklime or lime input, or before or after the location of quicklime or lime input. When jets or sprays of water are employed, the number of jets or sprays will often vary depending, for example, on the width of the reactor, the flow rate of water and the shape of the jet or spray. In many embodiments, the number of sprays or jets employed will be in the range of from 2 or 3 per metre to as many as 40 or 50, such as from 5 to 25 per metre of the spray or inlet bar.

The inlet for quicklime or lime can comprise apparatus, such as a funnel, to direct the quicklime or lime to a particular location in the slaking zone. However, in many embodiments of the present invention, the quicklime or lime is simply allowed to fall directly into the slaking zone.

As discussed above, in some embodiments of the present invention the hydrogen peroxide inlet can comprise the water inlet. However, in many embodiments of the present invention, the hydrogen peroxide inlet is separate from the water inlet. In such cases, the hydrogen peroxide inlet can comprise a means to allow the hydrogen peroxide solution to flow into the reactor and can comprise one or more jets or sprays. In many embodiments of the present invention, the hydrogen peroxide inlet is configured to add the hydrogen peroxide solution into the mixing zone.

The baffles to direct slaked lime to the mixing zone preferably comprise a pair of baffles angled with the flow of slaked lime and also comprising an aperture through which the slaked lime enters the mixing zone. Although straight baffles can be employed, it has been found in certain embodiments that the use of concave baffles can achieve good results.

The mixing zone can simply be formed by the flow of slaked lime through the aperture in the set of baffles. However, in many embodiments, it is desirable for the mixing zone additionally to comprise a mixing baffle, preferably aligned transversely to the flow, which tends to slow the flow of reagents, and also causes turbulence, tending to distribute the hydrogen peroxide added throughout the slaked lime, thereby promoting a more rapid and consistent reaction.

The reaction between hydrogen peroxide and slaked lime is often rapid, and is believed to have occurred to a significant extent before the slaked lime and hydrogen peroxide mixture leaves the mixing zone. After passing through the mixing zone, the mixture of slaked lime and hydrogen peroxide passes into the output zone, where the reaction may continue, before the product, which may be in the form of a slurry, is discharged from the reactor. The output zone may comprise additional baffles to regulate the rate of flow, and preferably comprises a shaped lip to allow more accurate dispensing of the product to the desired location.

The residence time in the reactor can vary depending upon a number of variables, including for example, the flow rates of the reagents, the angle of inclination, the particle size of the lime or quicklime and the mole ratio of lime or quicklime to H₂O₂. In certain embodiments of the present invention, the flow rate of reagents and the reactor dimensions are selected such that the average residence time of the reagents in.the slaking zone is in the range of from 1 second to 30 seconds, commonly from 3 to 15 seconds, the residence time in the mixing zone is selected to be up to about 10 seconds, preferably from 0.1 up to about 5 seconds and the residence time in the output zone is in the range of from 1 second to 20 seconds, commonly from 2 seconds to 10 seconds. The overall residence time in the reactor is often selected to be in the range of from 5 seconds to 60 seconds, commonly in the range of from about 10 seconds to about 30 seconds.

The reactor according to the present invention can optionally be fitted with a means to vibrate the reactor, to assist the flow of reagents through the reactor, particularly to reduce or prevent clogging of the reactor.

The particle size of the lime or quicklime employed in the reactor, or in the preparation of slurries for use in the reactor is commonly in the range of 60 microns to 3,000 microns, preferably from 100 microns to 1,000 microns.

Slurries employed in the reactor or produced by the mixing of the dry lime or quicklime with water in the slaking zone can comprise up to 40% by weight lime or quicklime, and preferably from 5% to 25% by weight.

The aqueous hydrogen peroxide solution employed commonly comprises from 10% to 75% by weight hydrogen peroxide, and particularly from 25% to 55% by weight. However, when the hydrogen peroxide inlet and water inlet are combined, the concentration of the hydrogen peroxide solution is often significantly lower. The mole ratio of lime or quicklime to hydrogen peroxide employed is commonly in the range of from 0.2 : 1 to 5 : 1, often in the range of from 0.5 : 1 to 3 : 1, and preferably in the range of from 0.7 : 1 to 1.5 : 1.

A specific embodiment of the invention is now described in more detail with reference to the Figures.

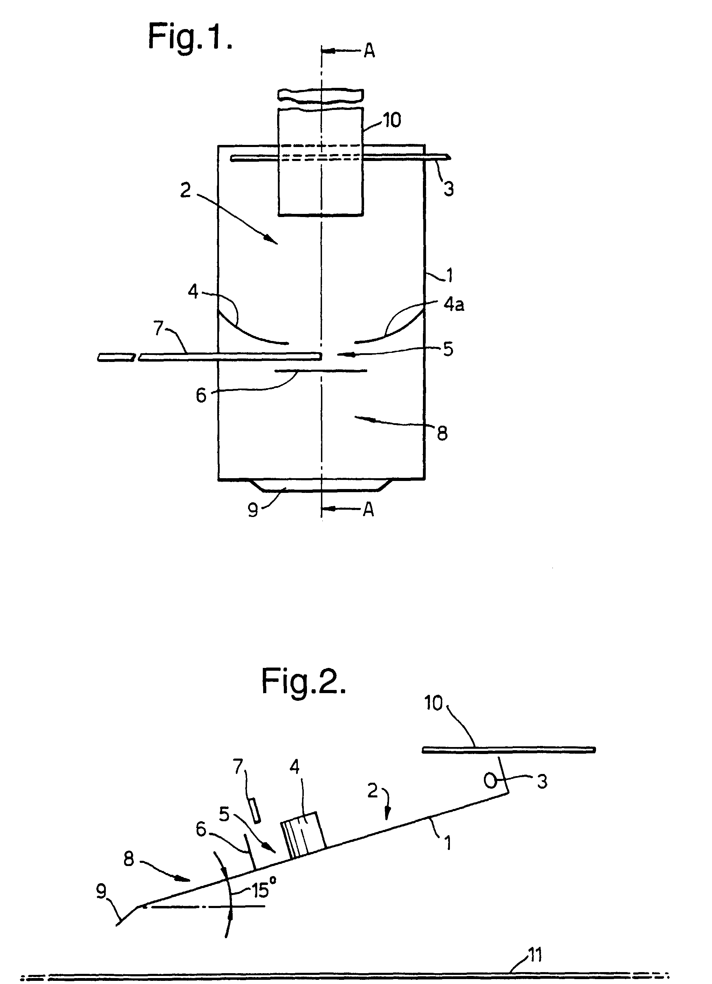

Figure 1 is a view from above perpendicular to a reactor according to the present invention. Figure 2 is a sectional view along line A-A in Figure 1. The reactor comprises a tray, 1, of length 300 mm, inclined at an angle of 15° to the horizontal. The reactor additionally comprises a water spray bar, 3, and an inlet for hydrogen peroxide, 7, both mounted above the tray, 1. The tray, 1, comprises a slaking zone, 2, partially bounded at its lower end by a pair of concave baffles, 4 and 4a, the baffles defining an opening leading to a mixing zone, 5. The mixing zone, 5, additionally comprises a mixing baffle, 6, transverse to the flow of reagent, below the opening. The mixing zone, 5, is contiguous with an output zone, 8, the output zone, 8, having a shaped downward flange, 9, at its lower edge. In use, a vibratory feeder, 10, supplies dry quicklime into the upper and mid portion of the slaking zone, 2. The water spray bar, 3, located under the vibratory feeder, 2, provides water to the slaking zone, 2. Slaking commences when the quicklime and water contact in the slaking zone, 2, and continues as the water and quicklime flow down the reactor. The pair of concave baffles, 4 and 4a, direct the flow of reagent into the mixing zone, 5. Hydrogen peroxide solution is added into the mixing zone, 5, via apertures in the inlet for hydrogen peroxide, 7, where it reacts with the slaked lime. Mixing of the reagents is assisted by the mixing baffle, 6. The reagents flow out of the mixing zone, 5, into the output zone, 8, and pass out of the reactor over the shaped flange, 9. The reactor is positioned so that the output from the reactor falls directly onto a crushed ore feed belt, 11.

The operation of a reactor according to the present invention is now described by way of example only.

In the Examples, the reactor employed was one as illustrated in Figures 1 and 2. Laboratory grade calcium oxide powder (ca. 95% pure) was fed into the slaking zone using a vibratory feeder at a feed rate of 40 g/min. Water was supplied to the slaking zone using a spray bar of length 18.5cm comprising 7 holes 1 mm in diameter. The efficiency of the reactor was measured by comparing the available oxygen ("avox") content of the slurry produced (As) with the avox introduced in the hydrogen peroxide solution (Aₕ). The avox of the slurry was determined by dissolving a sample of the slurry in phosphoric acid and titrating with potassium permanganate solution. The mole ratio of CaO : H₂O₂, % by weight of CaO in the slurry and the water flow rate are detailed in the Table below. In Examples 1 to 7, an aqueous solution of 35% w/w hydrogen peroxide was added to the mixing zone at a flow rate to give the necessary mole ratio of CaO : H₂O₂. In Examples 8 and 9, the hydrogen peroxide solution was premixed with the water added to the slaking zone to produce a hydrogen peroxide solution comprising 0.06% w/w hydrogen peroxide. The efficiency of the process ([Aₛ/Aₕ] x 100) is given in the Table below.

**Table.**

| Experimental Details and Results of Examples | | | | |
|---|---|---|---|---|
| Example | Mole Ratio CaO:H₂O₂ | % CaO in slurry | Water Flow Rate (mls/min) | % Efficiency |
| 1 | 0.8 : 1 | 10.2 | ca. 200 | 83 |
| 2 | 0.9 : 1 | 8.3 | ca. 200 | 94 |
| 3 | 1.0 : 1 | 16.0 | ca. 200 | 89 |
| 4 | 1.1 : 1 | 12.2 | ca. 200 | 96 |
| 5 | 0.8 : 1 | 10 | 400 | 88 |
| 6 | 1.0 : 1 | 10 | 400 | 93 |
| 7 | 1.2 : 1 | 10 | 400 | 92 |
| 8 | 1.0 : 1 | 10 | 400 | 89 |
| 9 | 1.0 : 1 1 | 10 | 400 | 91 |

The results in the Table demonstrate that the reactor according to the present invention can be employed to produce calcium peroxide at high efficiency under a range of different operating conditions. The results of Examples 8 and 9 demonstrate that the reactor can be operated in a single stage process with the hydrogen peroxide added to the water supplied to the slaking zone.

## Claims

1. An inclined reactor for the generation of calcium peroxide comprising an inlet for quicklime or lime, an inlet for water, an inlet for aqueous hydrogen peroxide solution, an inclined tray having a first, slaking zone; one or more baffles configured to direct slaked lime into a second, mixing zone, and a third, output zone.

2. A process for the production of calcium peroxide by reaction between slaked lime and hydrogen peroxide, wherein lime or quicklime, aqueous hydrogen peroxide solution and water are introduced through inlets into a reactor comprising an inclined tray having a first, slaking zone; one or more baffles configured to direct slaked lime into a second, mixing zone, and thereafter into a third, output zone, the lime or quicklime and water being introduced into the slaking zone of the reactor and the aqueous hydrogen peroxide solution being introduced contemporaneous with or subsequent to the water introduction.

3. A reactor or process according to either preceding claim, wherein the baffles to direct slaked lime to the reaction point comprise a pair of baffles angled with the flow of slaked lime and also comprise an aperture through which the slaked lime enters the mixing zone.

4. A reactor or process according to claim 3, wherein the baffles are concave.

5. A reactor or process according to any preceding claim, wherein the mixing zone additionally comprises a mixing baffle.

6. A reactor or process according to claim 5, wherein the mixing baffle is aligned transversely to the flow.

7. A reactor or process according to any preceding claim, wherein the water inlet is adapted to supply water to the slaking zone.

8. A reactor or process according to claim 7, wherein the water inlet comprises one or more jets or sprays.

9. A reactor or process according to any preceding claim, wherein the hydrogen peroxide solution inlet serves the function of the water inlet.

10. A reactor or process according to any preceding claim, wherein the reactor is inclined at an angle to the horizontal of from 5° to 45°.

11. A reactor or process according to claim 10, wherein the reactor is inclined at an angle to the horizontal of from 10° to 25°.

12. A process according to any one of claims 2 to 11, wherein the slaked lime is added to the reactor as a solid or as a slurry, or is produced by slaking quicklime in the slaking zone.

13. A process according to any one of claims 2 to 12, wherein the aqueous hydrogen peroxide solution is introduced into the mixing zone of the reactor.

## Patentansprüche

1. Schrägreaktor zur Erzeugung von Calciumperoxid, umfassend einen Einlaß für Branntkalk oder Kalk, einen Einlaß für Wasser, einen Einlaß für eine wässerige Wasserstoffperoxidlösung, einen schrägen Kasten mit einer ersten Zone, nämlich einer Löschzone; einem oder mehreren Leitblechen, angeordnet, um den Löschkalk in eine zweite Zone, nämlich eine Mischzone, und eine dritte Zone, nämlich eine Auslaßzone, zu leiten.

2. Verfahren zur Herstellung von Calciumperoxid durch Umsetzung zwischen Löschkalk und Wasserstoffperoxid, wobei Kalk oder Branntkalk, wässerige Wasserstoffperoxidlösung und Wasser durch Einlässe in einen Reaktor eingeführt werden, der einen schrägen Kasten mit einer ersten Zone, nämlich einer Löschzone; einem oder mehreren Leitblechen, angeordnet, um den Löschkalk in eine zweite Zone, nämlich eine Mischzone, und anschließend eine dritte Zone, nämlich eine Auslaßzone, zu leiten, umfaßt, wobei der Kalk oder Branntkalk und Wasser in die Löschzone des Reaktors eingeführt werden und die wässerige Wasserstoffperoxidlösung gleichzeitig mit oder anschließend an die Wassereinführung eingeführt wird.

3. Reaktor oder Verfahren nach einem vorangehenden Anspruch, wobei die Leitbleche zum Leiten von Löschkalk zu dem Reaktionspunkt ein Paar im Winkel zum Löschkalkstrom stehende Leitbleche umfassen und auch eine Schlitzöffnung, durch die der Löschkalk in die Mischzone eintritt, umfassen.

4. Reaktor oder Verfahren nach Anspruch 3, wobei die Leitbleche konkav sind.

5. Reaktor oder Verfahren nach einem vorangehenden Anspruch, wobei die Mischzone zusätzlich ein Mischleitblech umfaßt.

6. Reaktor oder Verfahren nach Anspruch 5, wobei das Mischleitblech quer zu dem Strom ausgerichtet ist.

7. Reaktor oder Verfahren nach einem vorangehenden Anspruch, wobei der Wassereinlaß so eingerichtet ist, daß der Löschzone Wasser zugespeist wird.

8. Reaktor oder Verfahren nach Anspruch 7, wobei der Wassereinlaß ein oder mehrere Düsen oder Sprüher umfaßt.

9. Reaktor oder Verfahren nach einem vorangehenden Anspruch, wobei der Einlaß für die Wasserstoffperoxidlösung der Funktion als Wassereinlaß dient.

10. Reaktor oder Verfahren nach einem vorangehenden Anspruch, wobei der Reaktor mit einem Winkel von 5° bis 45° zur Horizontalen geneigt ist.

11. Reaktor oder Verfahren nach Anspruch 10, wobei der Reaktor mit einem Winkel von 10° bis 25° zur Horizontalen geneigt ist.

12. Verfahren nach einem der Ansprüche 2 bis 11, wobei der Löschkalk als Feststoff oder als eine Aufschlämmung zu dem Reaktor gegeben wird oder durch Löschen des Branntkalks in der Löschzone hergestellt wird.

13. Verfahren nach einem der Ansprüche 2 bis 12, wobei die wässerige Wasserstoffperoxidlösung in die Mischzone des Reaktors eingeführt wird.

## Revendications

1. Réacteur incliné pour la production de peroxyde de calcium, comprenant une entrée pour la chaux vive ou la chaux, une entrée pour l'eau, une entrée pour la solution aqueuse de peroxyde d'hydrogène, un plateau incliné ayant une première zone d'extinction, une ou plusieurs cloisons disposées pour amener la chaux éteinte à une deuxième zone de mélange, et une troisième zone de sortie.

2. Procédé pour la production de peroxyde de calcium par la réaction entre la chaux vive et le peroxyde d'hydrogène, dans lequel la chaux ou la chaux éteinte, la solution aqueuse de peroxyde d'hydrogène et l'eau sont introduites par des entrées dans un réacteur comprenant un plateau incliné ayant une première zone d'extinction, une ou plusieurs cloisons disposées pour amener la chaux éteinte à une deuxième zone de mélange, et ensuite à une troisième zone de sortie, la chaux ou la chaux vive et l'eau étant introduites dans la zone d'extinction du réacteur et la solution aqueuse de peroxyde d'hydrogène étant introduites simultanément à l'introduction d'eau ou à la suite de celle-ci.

3. Réacteur ou procédé selon l'une quelconque des revendications précédentes, dans lequel les cloisons pour amener la chaux éteinte au point de réaction comprennent une paire de cloisons faisant un angle avec le flux de chaux éteinte et comprennent également une ouverture à travers laquelle la chaux éteinte pénètre dans la zone de mélange.

4. Réacteur ou procédé selon la revendication 3, dans lequel les cloisons sont concaves.

5. Réacteur ou procédé selon l'une quelconque des revendications précédentes, dans lequel la zone de mélange comprend en outre une cloison de mélange.

6. Réacteur ou procédé selon la revendication 5, dans lequel la cloison de mélange est alignée transversalement à l'écoulement.

7. Réacteur ou procédé selon l'une quelconque des revendications précédentes, dans lequel l'entrée d'eau est conçue pour amener l'eau à la zone d'extinction.

8. Réacteur ou procédé selon la revendication 7, dans lequel l'entrée d'eau comprend un ou plusieurs jets ou points de pulvérisation.

9. Réacteur ou procédé selon l'une quelconque des revendications précédentes, dans lequel l'entrée de la solution de peroxyde d'hydrogène joue le rôle d'entrée d'eau.

10. Réacteur ou procédé selon l'une quelconque des revendications précédentes, dans lequel le réacteur est incliné en faisant avec l'horizontale un angle allant de 5° à 45°.

11. Réacteur ou procédé selon la revendication 10, dans lequel le réacteur est incliné en faisant avec l'horizontale un angle allant de 10° à 25°.

12. Procédé selon l'une quelconque des revendications 2 à 11, dans lequel la chaux éteinte est introduite dans le réacteur sous forme de solide ou de suspension épaisse, ou est produite par l'extinction de la chaux vive dans la zone d'extinction.

13. Procédé selon l'une quelconque des revendications 2 à 12, dans lequel la solution aqueuse de peroxyde d'hydrogène est introduite dans la zone de mélange du réacteur.
